# EUROPEAN PATENT APPLICATION

(11) **EP 4 757 057 A1**
(43) Date of publication of application: **10.06.2026**
(21) Application number: 24849193.8
(22) Date of filing: 31.07.2024
(51) Int. Cl.: H01M 50/578, H01M 50/559, H01M 50/566

(54) **POWER STORAGE DEVICE**

(30) Priority: 31.07.2023 JP 2023124793
(71) Applicant: Panasonic Intellectual Property Management Co., Ltd., Kadoma-shi, Osaka 571-0057 (JP)
(72) Inventor: NAGAO Takeshi, Osaka 571-0057 (JP); NOGAMI Takahiro, Osaka 571-0057 (JP)
(74) Representative: Eisenführ Speiser
(86) International application number: PCT/JP2024/027267
(87) International publication number: WO 2025/028548

(57) **Abstract**

The present invention comprises an electrode body (14) that includes a positive electrode (11) and a negative electrode (12), a case (20) that accommodates the electrode body (14), and a sealing body (30) that closes the opening of the case (20). The sealing body (30) includes a sealing plate (31) that is electrically connected to the positive electrode (11), and a positive electrode terminal (32) that is disposed on the sealing plate (31) and is electrically connected to the sealing plate (31). The sealing plate (31) has a first surface facing toward the electrode body (14), and a second surface positioned on the axially opposite side from the first surface. The positive electrode terminal (21) is disposed on the second surface. The sealing plate (31) deforms in a direction away from the electrode body (14) in the axial direction P when the pressure within the case (20) increases. A holding part that covers the outer peripheral surface of the positive electrode terminal (32) and holds the positive electrode terminal (32) is formed on the second surface of the sealing plate (31).

## Description

### TECHNICAL FIELD

The present disclosure relates to a power storage device.

### BACKGROUND ART

A power storage device includes an electrode assembly that includes a positive electrode, a negative electrode, and a separator that are wound together, a case that accommodates the electrode assembly and electrolytic solution, and a sealing assembly that closes an opening portion of the case. The sealing assembly includes a sealing plate electrically connected to the positive electrode, and a terminal fixed to an upper surface of the sealing plate in some cases (e.g., PATENT LITERATURE 1).

### CITATION LIST

### PATENT LITERATURE

PATENT LITERATURE 1: International Publication No. WO2021/200737

### SUMMARY

According to the power storage device disclosed in Patent Literature 1, in comparison with a case where the entire sealing plate is configured to have a multi-layered structure by disposing a terminal member at part of the sealing plate, the thickness of the sealing plate can be prevented from increasing, and the energy density can be improved without increasing the height of a shoulder portion (crimped portion) of the case. However, the power storage device is required to have an improved energy density, while further improving the reliability.

Accordingly, it is an advantage of the present disclosure to provide a power storage device that can improve the reliability.

A power storage device according to the present disclosure comprises: an electrode assembly that includes a first electrode and a second electrode; a case that accommodates the electrode assembly; and a sealing assembly that closes an opening portion of the case, wherein the sealing assembly includes a sealing plate electrically connected to the first electrode, and a terminal that is disposed on the sealing plate and is electrically connected to the sealing plate, the sealing plate has a first surface that faces the electrode assembly, and a second surface positioned opposite the first surface in an axial direction, the terminal is disposed on the second surface, the sealing plate is deformed in the axial direction away from the electrode assembly when a pressure in the case increases, and a holding portion that covers an outer-peripheral surface of the terminal and holds the terminal is formed on the second surface of the sealing plate.

The power storage device according to the present disclosure may improve the reliability.

### BRIEF DESCRIPTION OF DRAWING

FIG. 1 is a schematic sectional view showing a power storage device that is one example of an embodiment.
FIG. 2 is a sectional view showing part of a sealing plate taken perpendicular to the circumferential direction according to the one example of the embodiment.
FIG. 3 is a schematic diagram showing a state where the internal pressure increases, and the sealing plate is inverted.
FIG. 4 is a sectional view showing part of a sealing assembly taken perpendicular to the circumferential direction according to another example of the embodiment.
FIG. 5 is a schematic sectional view showing a power storage device that is another example of the embodiment.
FIG. 6 is a schematic sectional view showing a power storage device that is another example of the embodiment.
FIG. 7 is a perspective view showing a sealing plate that is another example of the embodiment.
FIG. 8 is a schematic sectional view showing a power storage module that is one example of the embodiment.

### DESCRIPTION OF EMBODIMENTS

Examples of an embodiment of the present disclosure are described in detail below. In the following description, specific shapes, materials, directions, numerical values and the like are only examples for facilitating understanding of the present disclosure, and can be changed in accordance of the usage, purpose, specifications and the like as appropriate.

### [Power Storage Device]

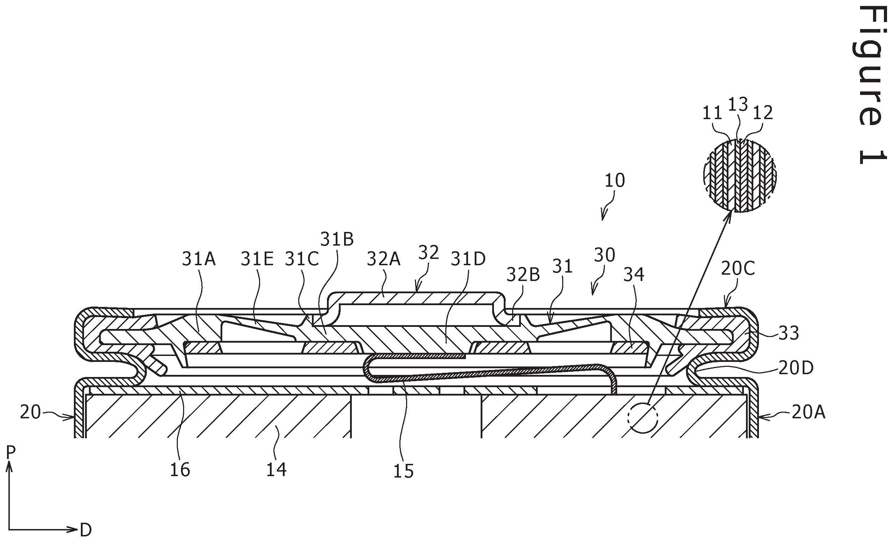

Referring to FIG. 1, a power storage device 10 that is one example of the embodiment is described.

The power storage device 10 comprises an electrode assembly 14 that includes a positive electrode 11 as a first electrode, and a negative electrode 12 as a second electrode that are wound with a separator 13 interposed therebetween, a case 20 that accommodates the electrode assembly 14, and a sealing assembly 30 that closes an opening of the case 20. The case 20 accommodates electrolytic solution along with the electrode assembly 14. The electrolytic solution in the present embodiment is assumed as a non-aqueous electrolytic solution, but may be an aqueous electrolytic solution. The power storage device 10 may be a capacitor. The sealing assembly 30 includes a sealing plate 31 electrically connected to the positive electrode 11, and a positive electrode terminal 32 that serves as a terminal and is fixed to an upper surface of the sealing plate 31 in a state of being open at an upper part.

According to the present embodiment, although the details are described later, the positive electrode 11 and the sealing plate 31 are electrically connected to each other, the terminal functions as the positive electrode terminal 32, the negative electrode 12 and the case 20 are electrically connected to each other, and the case 20 functions as a negative electrode terminal. Alternatively, in the power storage device of the present disclosure, the sealing plate and the negative electrode may be electrically connected to each other, the terminal may function as a negative electrode terminal, the positive electrode and the case may be electrically connected to each other, and the case may function as a positive electrode terminal. That is, the first electrode may be the negative electrode, and the second electrode may be the positive electrode.

Each member is described sometimes using an axial direction P, a circumferential direction R, and a radial direction D. For convenience of description, the description is sometimes made assuming that a side where the sealing plate 31 is provided in the axial direction P is an upper side, and a side where a bottom portion 20B of the case 20 is a lower side. Furthermore, the description is sometimes made using an inside and an outside in the radial direction D. For convenience of description, the term of the radial direction D is used. However, the case of the power storage device of the present disclosure is not necessarily cylindrical. The case may have a prism shape.

According to the power storage device 10, although the details are described later, in case an abnormality occurs in the power storage device 10 and the internal pressure increases, and resultantly the sealing plate 31 is bent (deformed), the positive electrode terminal 32 can be detached from the sealing plate 31, and the electric connection between the sealing plate 31 and the positive electrode terminal 32 can be disengaged. Accordingly, the reliability of the power storage device 10 can be improved.

The positive electrode 11 includes, for example, a strip-shaped positive electrode core material, and a positive electrode mixture layer formed on at least one surface of the positive electrode core material. A positive electrode core exposed portion where the positive electrode mixture layer is not provided on the positive electrode core material is provided at a certain position on the positive electrode 11 in the longitudinal direction. One end of the positive electrode tab 15 is joined to the positive electrode core exposed portion. The positive electrode core material may be made of metal foil that is stable in the potential range of the positive electrode 11, such as aluminum or an aluminum alloy, a film on which the metal is disposed as a surface layer or the like. Note that in the positive electrode in the present disclosure, the positive electrode core exposed portion may be formed on one end of the positive electrode core material in the width direction, an end surface of the electrode assembly that includes the positive electrode core exposed portion may be joined to a current collector plate, thus electrically connecting the current collector plate and the sealing plate to each other.

The positive electrode mixture layer contains a positive-electrode active material, a conductive agent such as acetylene black, and a binding agent such as polyvinylidene fluoride, and is formed on each of the opposite surfaces of positive electrode core material, for example. For example, a lithium transition metal composite oxide may be used as the positive-electrode active material.

The negative electrode 12 includes a negative electrode core material, and a negative electrode mixture layer formed on at least one surface of the negative electrode core material. The negative electrode core material may be made of metal foil that is stable in the potential range of the negative electrode 12, such as copper or a copper alloy, a film on which the metal is disposed as a surface layer or the like. Preferably, the negative electrode mixture layer contains, for example, a negative-electrode active material, and a binding agent such as styrene-butadiene rubber (SBR), and is formed on each of the opposite surfaces of the negative electrode core material. For example, graphite, a silicon-containing compound or the like is used as the negative-electrode active material. A negative electrode core exposed portion where the negative electrode mixture layer is not applied to the negative electrode core material is formed at a certain position on the negative electrode 12 in the longitudinal direction. One end of the negative electrode tab is joined to the negative electrode core exposed portion. Note that in the negative electrode in the present disclosure, the positive electrode core exposed portion may be formed on one end of the negative electrode core material in the width direction, an end surface of the electrode assembly that includes positive electrode core exposed may be joined to a current collector plate, thus electrically connecting the current collector plate and the case to each other.

The electrolyte is a non-aqueous electrolyte, and contains a non-aqueous solvent, and an electrolyte salt dissolved in the non-aqueous solvent. The non-aqueous solvent may contain, for example, any of esters, ethers, nitriles, and amides, and a mixed solvent of two or more of them, etc. The non-aqueous solvent may contain a halogen-substituted product that is any of these solvents with at least part of their hydrogens are substituted with halogen atoms such as fluorine. Examples of the non-aqueous solvent include ethylene carbonate (EC), ethyl methyl carbonate (EMC), and dimethyl carbonate (DMC), and mixed solvent of them. For example, a lithium salt such as LiPF₆ is used as the electrolyte salt.

The electrode assembly 14 is formed in a cylindrical shape by winding the positive electrode 11 and the negative electrode 12 with the separator 13 interposed therebetween around a winding core (not shown) in a state where the positive electrode core exposed portion and the negative electrode core exposed portion deviate from each other in the axial direction P so as to protrude respectively on the opposite sides. Note that the electrode assembly in the present disclosure is not necessarily formed by winding the positive electrode, the negative electrode, and the separator. This assembly may be formed in a zigzag pattern instead. Further alternatively, the electrode assembly in the present disclosure may be a stacked body formed by alternately stacking positive electrodes, negative electrodes, and separators. In the case of the stacked body, a plurality of positive electrode tabs joined to the respective positive electrode plates may be provided.

The positive electrode tab 15 that extends from the upper end of the electrode assembly 14 and connects the positive electrode 11 included in the electrode assembly 14 to the sealing plate 31, and the upper insulating plate 16 disposed between the electrode assembly 14 and the sealing plate 31 are provided above the electrode assembly 14. The positive electrode tab 15 electrically connects the positive electrode 11 and the sealing plate 31 to each other. Accordingly, an after-mentioned positive electrode terminal 32 is electrically connected to the positive electrode 11. The upper insulating plate 16 prevents the positive electrode 11 and the positive electrode tab 15 from coming into contact with the case 20, and prevents the positive electrode tab 15 from coming into contact with the negative electrode 12 of the electrode assembly 14.

The negative electrode tab (not shown) that extends from the lower end of the electrode assembly 14 and connects the negative electrode 12 included in the electrode assembly 14 to the inner surface of the bottom portion of the case 20, and the lower insulating plate (not shown) disposed between the electrode assembly 14 and the inner surface of the bottom portion 20B of the case 20 are provided under the electrode assembly 14. The negative electrode tab electrically connects the negative electrode 12 to the inner surface of the bottom portion 20B of the case 20. Accordingly, the case 20 functions as the negative electrode. The lower insulating plate prevents the negative electrode 12 and the negative electrode tab from coming into contact with the case 20, and prevents the negative electrode tab from coming into contact with the positive electrode 11 of the electrode assembly 14.

The case 20 is, for example, a metal container that has a closed-bottom cylindrical shape with the upper end being open. Typically, the case 20 is made of a metal that contains iron as a principal component. However, in a case where the positive electrode 11 is connected, the case 20 may be made of a metal that contains aluminum, etc. as a principal component. The case 20 includes: a cylindrical portion 20A formed in a cylindrical shape; a bottom portion 20B that has a circular shape when viewed from the bottom surface; a shoulder portion 20C that extends inward from the open end of the cylindrical portion 20A and is formed in a ring shape; and a groove portion 20D formed along the circumferential direction R of the cylindrical portion 20A. Note that the case 20 may have a prism shape.

The groove portion 20D is formed adjacent to the opening of the case 20 at a position apart from the shoulder portion 20C by a predetermined length. The groove portion 20D is a portion that is part of the cylindrical portion 20A that extends to the inside of the case 20, and is formed by applying a spinning process to the cylindrical portion 20A from the outside, for example. Note that at the formation position of the groove portion 20D, the diameter of the case 20 decreases, and a narrow-lined groove is formed in the outer-peripheral surface of the cylindrical portion 20A. Preferably, the groove portion 20D has a substantially U-shape section, and is formed in the ring shape over the entire length in the circumferential direction R of the cylindrical portion 20A.

### [Sealing Assembly]

Referring to FIGS. 1 to 4, the sealing assembly 30 is described.

As shown in FIG. 1, the sealing assembly 30 is configured to have a disk shape as a whole, for example. In the case where the case 20 has a prism shape, the sealing assembly 30 may have a polygonal plate shape. The sealing assembly 30 is disposed above the groove portion 20D of the case 20, and is fixed to an upper end portion of the case 20. In more detail, the shoulder portion 20C of the case 20 is bent inward, and crimped to the sealing assembly 30, the sealing assembly 30 is fixed to the upper end portion of the case 20 by the shoulder portion 20C and the groove portion 20D of the case 20, and the sealing assembly 30 closes the opening of the case 20.

The sealing assembly 30 includes the sealing plate 31, the positive electrode terminal 32 as a terminal fixed to the upper surface of the sealing plate 31, a gasket 33 provided at an outer peripheral portion 31A of the sealing plate 31, and an insulating member 34 provided under the sealing assembly 30; these elements are each described later in detail.

The sealing plate 31 is formed in, for example, a disk shape, and is made of a conductive material; this material may be, for example, aluminum or an aluminum alloy. The sealing plate 31 includes a first surface on a side closer to the electrode assembly 14, and a second surface on a side opposite the first surface in the axial direction P. The sealing plate 31 includes: the outer peripheral portion 31A crimped and fixed to the opening portion of the case 20; a center portion 31B formed in the outer peripheral portion 31A; a ring-shaped wall portion 31C that protrudes upward as the holding portion from the second surface of the center portion 31B; a convex portion 31D which protrudes downward from the first surface of the center portion 31B and to which the positive electrode tab 15 is joined; and a thin-wall portion 31E interposed between the outer peripheral portion 31A and the center portion 31B. Note that in the sealing plate 31, the holding portion may be disposed adjacent to a portion farthest from the electrode assembly 14 (most displaced in the axial direction P) when the pressure in the case 20 increases. Accordingly, the holding portion is not necessarily disposed at the center portion 31B of the sealing plate 31. In a case where a certain position on the sealing plate 31 different from the center is farthest from the electrode assembly 14, the holding portion is disposed at the deviating position.

In a case where the power storage devices 10 are configured as, for example, power storage modules, each positive electrode terminal 32 as the terminal is a terminal for welding on the positive electrode side to allow the power storage devices 10 to be connected in series or parallel to each other. The positive electrode terminal 32 is substantially formed in a disk shape, and is made of, for example, iron, nickel, stainless steel, copper or the like as the material. The positive electrode terminal 32 may be made of, for example, aluminum or an aluminum alloy as the material, which is the same as that of the sealing plate 31. The positive electrode terminal 32 includes: a convex portion 32A that includes a top plate portion, and a skirt portion extending from the periphery of the top plate portion to the second surface in the axial direction P; and a flange portion 32B formed around the convex portion 32A (skirt portion). Note that the positive electrode terminal 32 is not necessarily include the convex portion 32A or the flange portion 32B. The positive electrode terminal 32 may simply be a conductive flat plate. The positive electrode terminal 32 is disposed at the center portion of the sealing plate 31. However, the power storage device of the present disclosure is not limited to this configuration. In the power storage device of the present disclosure, the terminal may be disposed so as to cover an area of being most displaced when the pressure in the case increases.

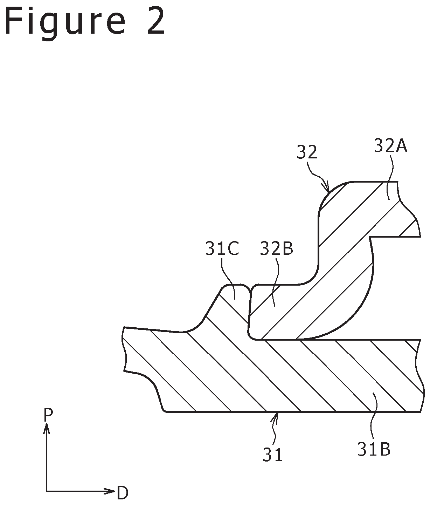

On the upper surface (second surface) of the sealing plate 31, the top surface of the positive electrode terminal 32 is not necessarily covered by the holding portion in the axial direction P (the entire top surface is exposed from the holding portion), and may be fixed by the holding portion. In other words, a portion of the positive electrode terminal 32 that is other than the top surface is covered and fixed by the holding portion. In more detail, as shown in FIG. 2, the inner side surface of the wall portion 31C of the sealing plate 31 is in contact with the outer-peripheral surface of the flange portion 32B of the positive electrode terminal 32, and the positive electrode terminal 32 is fixed to the sealing plate 31. In other words, no portion for fixing the positive electrode terminal 32 to sealing plate 31 is required on the top surface of the positive electrode terminal 32.

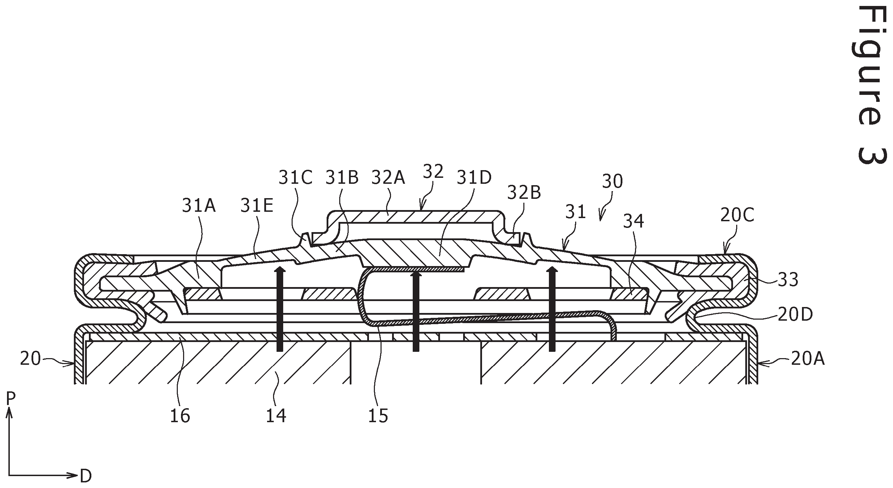

According to the configuration described above, as shown in FIG. 3, in case an abnormality occurs in the power storage device 10 and the internal pressure increases, the thin-wall portion 31E is preferentially deformed, the sealing plate 31 is bent (deformed) so as to bulge upward. Since the top surface of the positive electrode terminal 32 is fixed in the open state, possible bending of the sealing plate 31 allows the positive electrode terminal 32 to be detached from the sealing plate 31, which can disengage the electric connection between the sealing plate 31 and the positive electrode terminal 32. As a result, the reliability of the power storage device 10 can be improved.

Preferably, here, if the sealing plate 31 is bent so as to bulge upward, the wall portion 31C opens outward in the radial direction D. Accordingly, the wall portion 31C is disposed to surround the area (the center of the sealing plate 31) that is farthest from the electrode assembly 14 on the sealing plate 31. In more detail, preferably, if the sealing plate 31 is bent to bulge upward, the angle (α in FIG. 1) formed between the inner-peripheral surface of the wall portion 31C and the upper surface (the surface expanding in the radial direction D) of the center portion 31B is greater than or equal to 90°. Accordingly, if the sealing plate 31 is bent, the positive electrode terminal 32 can be securely detached from the sealing plate 31. Note that the wall portion 31C may have a cylindrical shape, or be intermittently disposed in the circumferential direction R. The intermittent arrangement of the wall portion 31C facilitates the displacement of the sealing plate 31 more than the sealing plate 31 that includes the cylindrical wall portion 31C.

Note that to fix the positive electrode terminal 32 to the sealing plate 31, the pressure is applied to the wall portion 31C from the outside, and the wall portion 31C and the positive electrode terminal 32 are crimped and fixed to each other. Accordingly, in a normal case, the positive electrode terminal 32 is strongly fixed to the sealing plate 31. The outer-peripheral surface of the positive electrode terminal 32 (flange portion 32B) crimped and fixed to the wall portion 31C may be inclined so as to have a diameter that enlarges toward the second surface of the sealing plate 31. According to this configuration, in the case of crimping fixation to the wall portion 31C, the displacement of the positive electrode terminal 32 in the axial direction P and the radial direction D can be regulated. If the sealing plate 31 is deformed, the wall portion 31C can easily get away in the radial direction D from the inclined outer-peripheral surface of the positive electrode terminal 32. In this case, the crimped wall portion 31C may be inclined in accordance with the inclined outer-peripheral surface of the positive electrode terminal 32 such that the inner diameter of the wall portion increases toward the second surface.

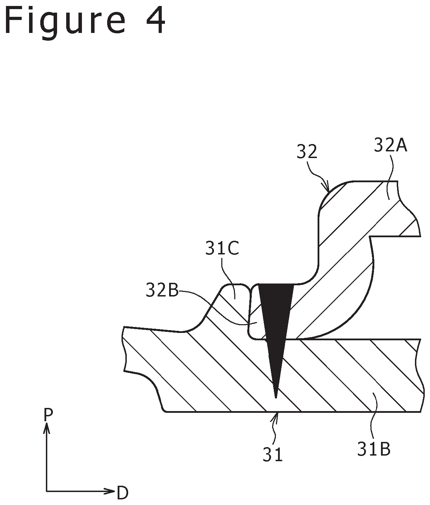

As shown in FIG. 4, the wall portion 31C and the positive electrode terminal 32 are crimped and fixed to each other, and the center portion 31B of the sealing plate 31 and the flange portion 32B of the positive electrode terminal 32 may be fixed to each other by welding. Note that even in the case of fixation by welding, the positive electrode terminal 32 can be detached from the sealing plate 31 when the sealing plate 31 is bent. The wending may be spot welding, or welding over the entire periphery. Note that the wall portion 31C and the positive electrode terminal 32 are not necessarily welded to each other.

Referring again to FIG. 1, the positive electrode tab 15 is joined to the convex portion 31D of the sealing plate 31. Accordingly, the sealing plate 31 and the positive electrode 11 can be electrically connected to each other via the positive electrode tab 15. As a result, the number of components of the power storage device 10 can be reduced.

Conventionally, according to the aforementioned power storage device where the sealing plate and the positive electrode are electrically connected to each other via the positive electrode tab, in case an abnormality occurs in the power storage device and the internal pressure increases, and resultantly the sealing plate is bent, the juncture between the sealing plate and the positive electrode tab is disengaged, which disengages the electric connection between the sealing plate and the positive electrode terminal. However, even if the internal pressure increases and the sealing plate is bent, the flexible positive electrode tab is displaced to follow the deformation of the sealing plate, the juncture between the sealing plate and the positive electrode tab is not disengaged, and the electrical connection between the sealing plate and the positive electrode terminal cannot be disengaged in some cases.

According to the power storage device 10 of the present embodiment, even if the internal pressure increases, the sealing plate 31 is bent, the positive electrode tab 15 is elongated, and the juncture between the sealing plate 31 and the positive electrode tab 15 is not disengaged (irrespective of whether the sealing plate 31 and the positive electrode tab 15 is separated from each other or not), the positive electrode terminal 32 can be detached from the sealing plate 31, and the current flowing from the sealing plate 31 to the positive electrode terminal 32 can be blocked. Accordingly, the reliability of the power storage device 10 can be further improved.

As described above, at the sealing plate 31, possible occurrence of an abnormality in the power storage device 10 increases the internal pressure, the thin-wall portion 31E is bent, the positive electrode terminal 32 is detached from the sealing plate 31, which can electrically disengage the sealing plate 31 and the positive electrode terminal 32. If the internal pressure of the power storage device 10 further increases after the disengagement, the thin-wall portion 31E is preferentially fractured, and an exhaust port for gas is formed in the sealing plate 31. Accordingly, the reliability of the power storage device 10 can be further improved.

The gasket 33 is a rubber member or a plastic member for preventing the case 20 and the sealing plate 31 from coming into contact with each other, and for securing electric insulation between the case 20 and the sealing plate 31. The gasket 33 closes the gap between the case 20 and the sealing plate 31, and seals the inside of the power storage device 10.

The insulating member 34 is disposed under the sealing plate 31. A through-hole is formed in the center portion of the insulating member 34, and the convex portion 31D of the sealing plate 31 is engaged therein. A plurality of opening portions for releasing the gas in case the internal pressure increases are formed in the insulating member 34. Note that the insulating member 34 may be integrally formed with the gasket 33.

### [Another Embodiment]

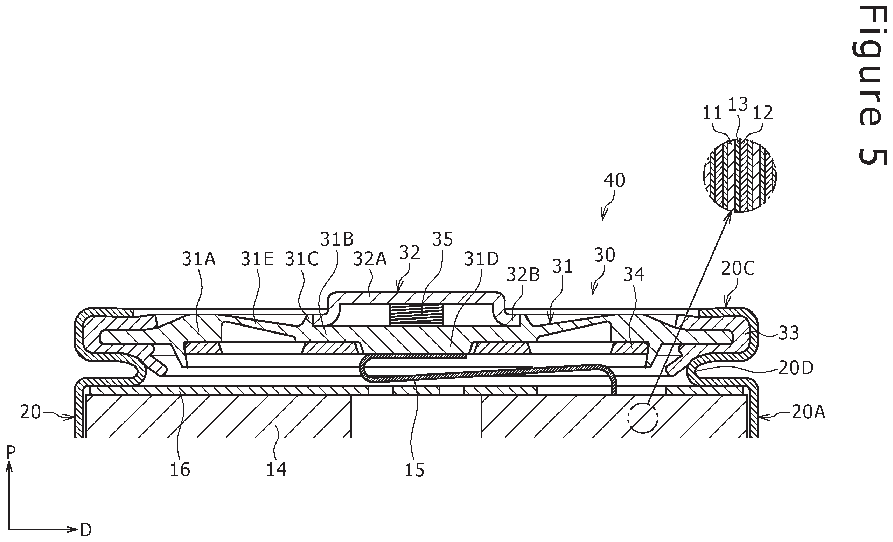

Referring to FIGS. 5 to 8, a power storage device 40 that is another example of the embodiment, and a power storage module 60 that comprises a power storage device 50 that is another example of the embodiment are described. Note that only components different from those in the aforementioned power storage device 10 are described below. The description of components similar to those of the power storage device 10 is omitted or described using the same symbols.

As shown in FIG. 5, the power storage device 40 comprises: an electrode assembly 14 that includes a positive electrode 11 and a negative electrode 12 that are wound with a separator 13 interposed therebetween; a case 20 that accommodates an electrode assembly 14; and a sealing assembly 30 that closes an opening of the case 20. The case 20 accommodates electrolytic solution along with the electrode assembly 14. The sealing assembly 30 includes a sealing plate 31 electrically connected to the positive electrode 11, and a positive electrode terminal 32 fixed to an upper surface of the sealing plate 31 in a state of being open at an upper side.

A spring 35 as an elastic member as an example of a spacer portion is disposed between the sealing plate 31 and the positive electrode terminal 32. The spring 35 is disposed between the sealing plate 31 and the positive electrode terminal 32 in a state where the positive electrode terminal 32 is urged in the direction (e.g., the axial direction P) of detaching the positive electrode terminal 32 from the sealing plate 31 (a state of compression by the positive electrode terminal 32 and the sealing plate 31). Preferably, the spring 35 is made of an electrically insulating material, such as resin or ceramic, for example. Instead of the spring 35, a block-shaped rubber body may be disposed.

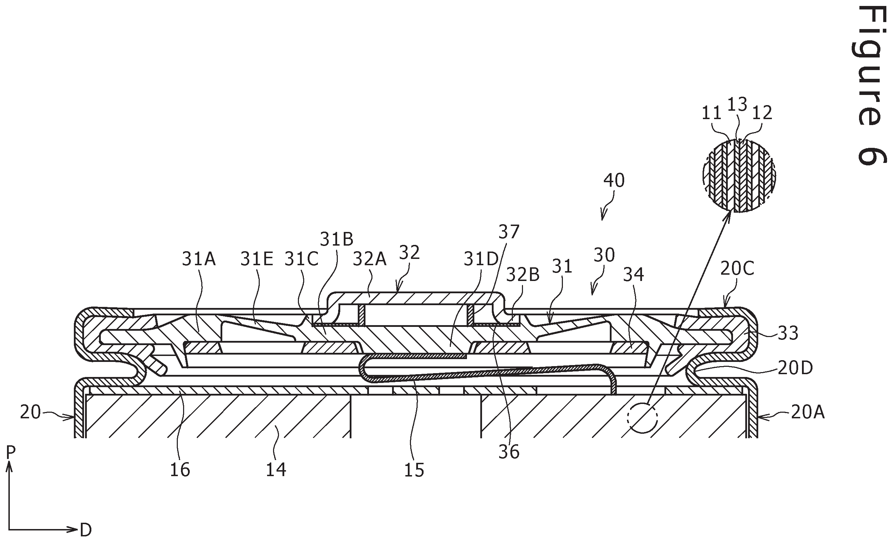

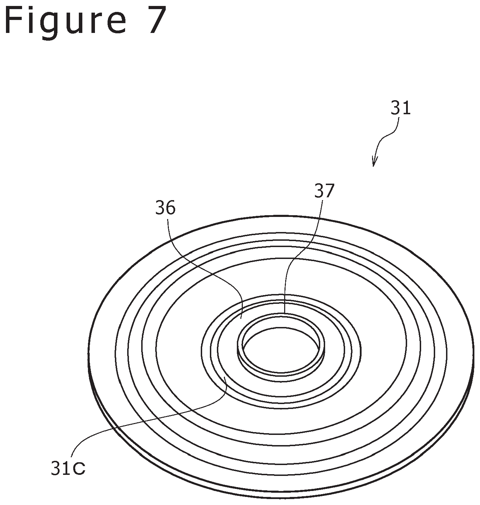

As shown in FIGS. 6 and 7, besides the spring, the insulating member 36 may be disposed as a spacer portion on the surface of an area of the sealing plate 31 that is surrounded by the holding portion. In the area surrounded by the holding portion, at a position closer than the holding portion to a most displaced area on the sealing plate 31, a protrusion 37 that electrically insulates the positive electrode terminal 32 and the sealing plate 31 from each other may be formed. The provided protrusion 37 allows the sealing plate 31 to easily protrude in the axial direction P beyond the holding portion after the sealing plate 31 is bent. Accordingly, the positive electrode terminal 32 and the sealing plate 31 can be easily regulated to be conductive again. Note that for the insulating member 36, a method of applying an oxidation treatment to the surface of the sealing plate 31, a method of pasting an insulating sheet, a method of applying an insulating material or the like is employed. The insulating sheet may be, for example, polyimide tape or the like. The applied insulating material may be, for example, silicon adhesive or the like.

According to the power storage device 40 of the present embodiment, in case an abnormality occurs in the power storage device 40, the internal pressure increases, and resultantly the sealing plate 31 is bent, the positive electrode terminal 32 can be detached from the sealing plate 31 as described above. In this case, by providing the spring 35 between the sealing plate 31 and the positive electrode terminal 32, the detached positive electrode terminal 32 can be prevented from coming into contact with the sealing plate 31. Accordingly, the electric connection between the sealing plate 31 and the positive electrode terminal 32 can be securely disengaged. As a result, the reliability of the power storage device 40 can be further improved.

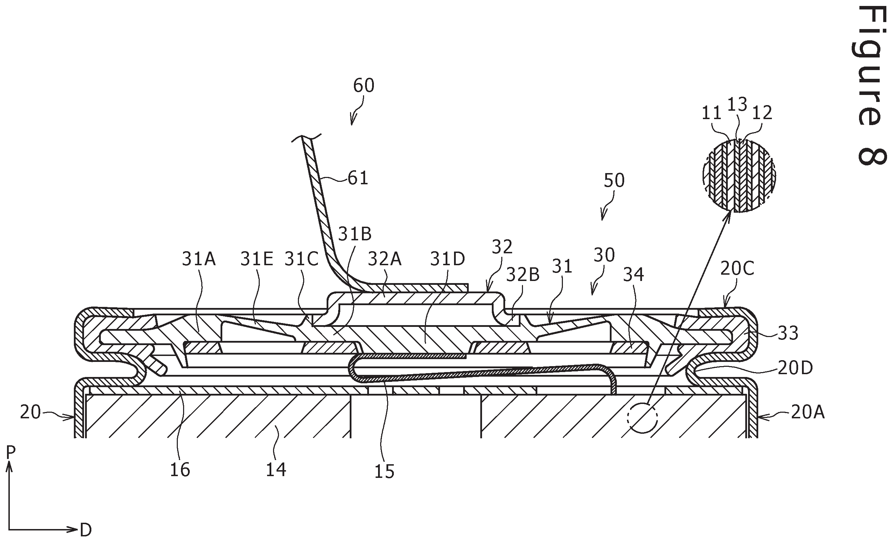

As shown in FIG. 8, the power storage module 60 comprises: a plurality of power storage devices 50; a positive electrode current collector (not shown) where a positive electrode lead 61 connected to the positive electrode terminal 32 of each power storage device 50 is formed; and a negative electrode current collector (not shown) where a negative electrode lead (not shown) connected to the case 20 of each power storage device 50 is formed.

The power storage devices 50 may be packed in the power storage module 60 in the closest manner in consideration of safety, and the adjacent power storage devices 50 may be arranged substantially close to each other. In the power storage module 60, for example, in plan view, the arrangement may be made such that the periphery of one power storage device 50 is surrounded by six power storage devices 50 (or arranged in a staggered manner). The power storage devices 50 may be connected in parallel or series via a current collector plate (busbar).

The positive electrode lead 61 is provided on the current collector plate, and is joined to the positive electrode terminal 32 by welding. The positive electrode lead 61 is an elastic member, and is joined to the positive electrode terminal 32 by welding in a state where the positive electrode terminal 32 is urged in a direction in which the positive electrode terminal 32 is detached from the sealing plate 31.

According to the power storage device 50 of the present embodiment, in case an abnormality occurs in the power storage device 50, the internal pressure increases, and resultantly the sealing plate 31 is bent, the positive electrode terminal 32 is detached from the sealing plate 31 (holding portion) as described above. In this case, the urging force by the positive electrode lead 61 causes the positive electrode terminal 32 detached from the sealing plate 31 to be away from the sealing plate 31, which can prevent contact with the sealing plate 31. Accordingly, the electric connection between the sealing plate 31 and the positive electrode terminal 32 can be securely disengaged. As a result, the reliability of the power storage device 10 can be further improved.

Note that the present disclosure is not limited to the aforementioned embodiments and modified examples thereof. It is a matter of course that various changes and modifications can be made in the range of items described in the claims of the present application.

### REFERENCE SIGNS LIST

10, 40, 50 Power storage device, 11 Positive electrode (first electrode), 12 Negative electrode (second electrode), 13 Separator, 14 Electrode assembly, 15 Positive electrode tab, 16 Upper insulating plate, 20 Case, 20A Cylindrical portion, 20B Bottom portion, 20C Shoulder portion, 20D Groove portion, 30 Sealing assembly, 31 Sealing plate, 31A Outer peripheral portion, 31B Center portion, 31C Wall portion (holding portion), 31D Convex portion, 31E Thin-wall portion, 32 Positive electrode terminal (terminal), 32A Convex portion, 32B Flange portion, 33 Gasket, 34 Insulating member, 35 Spring (spacer portion), 36 Insulating member, 37 Protrusion, 60 Power storage module, 61 Positive electrode lead

## Claims

1. A power storage device, comprising:
an electrode assembly that includes a first electrode and a second electrode;
a case that accommodates the electrode assembly; and
a sealing assembly that closes an opening portion of the case,
wherein the sealing assembly includes a sealing plate electrically connected to the first electrode, and a terminal that is disposed on the sealing plate and is electrically connected to the sealing plate,
the sealing plate has a first surface that faces the electrode assembly, and a second surface positioned opposite the first surface in an axial direction,
the terminal is disposed on the second surface,
the sealing plate is deformed in the axial direction away from the electrode assembly when a pressure in the case increases, and
a holding portion that covers an outer-peripheral surface of the terminal and holds the terminal is formed on the second surface of the sealing plate.

2. The power storage device according to claim 1, wherein
the holding portion includes a wall portion that protrudes outward in the axial direction from the second surface of the sealing plate, and
the outer-peripheral surface of the terminal is in contact with the wall.

3. The power storage device according to claim 1, wherein
the terminal is disposed so as to overlap an area on the sealing plate that is farthest from the electrode assembly when the pressure in the case increases, and
the holding portion is disposed so as to surround the area.

4. The power storage device according to claim 3, wherein
the outer-peripheral surface of the terminal is inclined so as to be enlarged as approaching the second surface in the axial direction, and
an entire reverse side of a surface of the terminal that faces the second surface is exposed from the holding portion.

5. The power storage device according to claim 4, wherein
the terminal and the sealing plate are joined to each other by welding.

6. The power storage device according to any one of claims 2 to 5, wherein
the outer-peripheral surface of the terminal includes a flange portion, and
the flange portion is formed to have an end surface in a radial direction that is inclined to be enlarged from one side in the axial direction toward another side.

7. The power storage device according to any one of claims 1 to 6, wherein
a gap is formed between the terminal and the second surface in the axial direction, and
an elastic body that is electrically insulated from the terminal is disposed in the gap in a state of being compressed in the axial direction.

8. The power storage device according to any one of claims 3 to 5, wherein
a gap is formed between the terminal and the second surface in the axial direction,
a protrusion is formed on the second surface closer to the area than the holding portion, and
the protrusion is electrically insulated from the terminal.

9. The power storage device according to any one of claims 1 to 8, wherein
the terminal includes a top plate portion, and a skirt portion that extends from a periphery of the top plate portion toward the second surface in the axial direction.
